# EUROPÄISCHE PATENTSCHRIFT

(11) **EP 1 772 707 B1**
(45) Veröffentlichungstag und Bekanntmachung des Hinweises auf die Patenterteilung: **07.12.2011**
(21) Anmeldenummer: 06020970.7
(22) Anmeldetag: 05.10.2006
(51) Int. Cl.: G01D 11/24, H01Q 1/50, H01Q 7/00, H01R 13/66

(54) **Messvorrichtung**
Measuring device
Dispositif de mesure

(30) Priorität: 05.10.2005 DE 102005047762
(43) Veröffentlichungstag der Anmeldung: 11.04.2007
(73) Patentinhaber: WTW Wissenschaftlich-Technische Werkstätten GmbH, 82362 Weilheim (DE)
(72) Erfinder: Klüpfel, Wilhelm, 82398 Polling (DE)
(74) Vertreter: Steimle, Josef

(56) Entgegenhaltungen:
- DE-A1- 19 722 744
- DE-A1- 19 802 462
- DE-B3- 10 244 304
- US-A1- 2005 192 727

## Beschreibung

Die vorliegende Erfindung betrifft eine Messvorrichtung, d.h. eine Vorrichtung zur Messung und ggf. Analyse von Parametern von Feststoffen, Schüttungen oder Fluiden, d.h. von Gasen oder Flüssigkeiten und allen Mischungen davon.

Als Messeinheiten können alle Einheiten verwendet werden, die als Messfühler für physikalische oder chemische Größen fungieren oder solche enthalten, bevorzugt pH-Messketten, Redox-Messketten, ionenselektive Messketten, Leitfähigkeitszellen, Sauerstoffsensoren, Trübungssensoren, o.ä.. Eine derartige Messvorrichtung umfasst ein Messgerät, mit welchem die Messdaten von einer oder mehreren Messeinheiten, vorzugsweise Sensoren, erfassbar sind. Das Messgerät kann selbstverständlich auch eine Einheit zur Auswertung, Speicherung und/oder Anzeige der Messwerte aufweisen.

Damit das Messgerät erkennt, welcher Sensor angeschlossen ist, ist der Sensor mit einem Transponder versehen, in welchem Identifikationsdaten, wie z.B. eine Sensorkennung oder Seriennummer als auch Kalibrierungsdaten oder eine Kalibrierungshistorie abgelegt sein können. Der Transponder kann hierbei entweder als aktiver Transponder ausgebildet sein, in welchem Fall eine Energieversorgung, z.B. eine Batterie oder Akku, für ihn nötig ist. Vorzugsweise ist er als passiver Transponder ausgebildet, d.h. er bezieht seine Energie von einer Antenne, die zur bidirektionellen Datenübertragung zwischen Messgerät und Transponder dient, die jedoch auch gleichzeitig die notwendige Energie für die Tätigkeit des Transponders bereitstellt.

Eine Messvorrichtung dieser Art ist aus der DE 198 02 462 C2 bekannt. Auch wenn mit dieser Vorrichtung eine eindeutige Sensorerkennung durch das Messgerät möglich ist, arbeitet diese - Vorrichtung nicht in jeder Beziehung voll zufriedenstellend. So ist z.B. der Transponder immer in der Nähe des Sensors angeordnet und es sind entweder zwei getrennte Leitungen für die Zuführung der Antennenspule zum Transponder oder eine kombinierte Leitung notwendig, in der sowohl die Datenleitung als auch die Zuleitung zur Antennenspule integriert ist.

Es ist daher Aufgabe der Erfindung, eine Messvorrichtung zu schaffen, die zuverlässig und mit einfachen Mitteln eine eindeutige Sensorerkennung zulässt, wobei das Einsatzgebiet der Sensoren nicht eingeschränkt ist. Diese Aufgabe wird erfindungsgemäß bei einer Vorrichtung der gattungsgemäßen Art durch die kennzeichnenden Merkmale des Anspruchs 1 gelöst. Vorteilhafte Weiterbildungen der Erfindung sind Gegenstand der Unteransprüche.

Erfindungsgemäß ist die Messeinheit, z.B. der Sensor, unlösbar mit dem Datenkabel verbunden. Datenkabel im Sinne dieser Anmeldung ist jedes Kabel zur Übertragung von analogen oder digitalen Signalen der Messeinheit. Unlösbar bedeutet in diesem Zusammenhang unlösbar im täglichen Gebrauch. Es ist natürlich wünschenswert, wenn für Wartungs- oder Reparaturzwecke der Sensor vom Datenkabel getrennt werden kann. Dies sollte jedoch nur unter Zuhilfenahme von Werkzeug möglich sein, so dass ein Entfernen des Sensors vom Datenkabel im täglichen Gebrauch nicht möglich ist.

Weiterhin ist in der Erfindung die Kommunikationseinrichtung für die Transponderdaten in dem Messgerät angeordnet, was die Anzahl der notwendigen Komponenten verringert und die gesamte Apparatur unkomplizierter in der Handhabung werden lässt. Die Kommunikationseinrichtung handhabt die Kommunikation mit dem Transponder und ist bei einem bidirektionalen Transponder in der Lage, den Transponder auszulesen und ihn zu beschreiben. Der Transponder ist an dem dem Messgerät zugewandten Verbindungselement des Datenkabels, in der Regel an einem Stecker oder am Kabel selbst, angeordnet und tritt in Wechselwirkung mit einer Antenne, die an dem messgeräteseitigen Verbindungselement, z.B. einer Buchse, mehreren Buchsen oder einem als Gehäusekomponente eingesetzten Buchsenfeld, angeordnet und in dem Messgerät, vorzugsweise in dem Gehäuse des Messgeräts, integriert ist. Das Verbindungselement am Messgerät kann somit entweder auf einer etwas vom Gehäuse abstehenden Steckerleiste oder dem erwähnten Buchsenfeld ausgebildet sein oder eben vorzugsweise in entsprechenden Buchsenöffnungen in dem Gehäuse des Messgeräts.

Der Vorteil dieser Anordnung besteht darin, dass über das Datenkabel in der Tat nur die Messdaten der Messeinheit an das Messgerät übertragen werden, bzw. im Fall einer bidirektionalen Verbindung zwischen Messeinheit und Messgerät die notwendigen Mess- und Steuerdaten. Dies verringert den Aufwand für das Datenkabel selbst als auch für die Anschlussvorrichtung des Datenkabels und gilt insbesondere auch für Datenkabel mit analoger Signalübertragung. Dadurch, dass erfindungsgemäß der Transponder von dem Sensor räumlich getrennt ist, ist es möglich, diese Anordnung auch für Sensoren zu verwenden, die unter Bedingungen (Feuchtigkeit, Hitze) arbeiten, unter welchen ein Transponder nicht funktionsfähig wäre. Der Einsatzbereich eines Sensors wird somit nicht durch den Transponder eingeschränkt.

Selbstverständlich kann das Messgerät mehrere Buchsen für den gleichzeitigen Anschluss mehrerer Messeinheiten, z.B. zur Messung unterschiedlicher Messgrößen oder Parameter haben, wobei dann entweder eine Antennenspule, die mehrere Buchsen umgibt, oder für jede Buchse eine separate Antennenspule vorgesehen sein kann. Im Falle, dass eine Übertragungsspule für alle Buchsen an dem Messgerät vorgesehen ist, ist es notwendig zu erfassen, in welcher Position die Sensoren angeordnet sind. Dies kann entweder durch eine spezielle geometrische Ausbildung der Steckersysteme selbst oder durch eine zeitliche Erfassung der Reihenfolge des Einsteckens der Messeinheiten am Messgerät detektiert werden. Im Falle einer zeitlichen Detektierung weiß die Kommunikationseinrichtung bzw. eine damit verbundene Logikschaltung, dass, wenn eine erste Messeinheit an einer ersten Buchse eingesteckt wurde, die Kommunikationseinrichtung die dann verfügbaren Transponderdaten dieser Buchse zuordnet, womit weitere Transponderdaten dann automatisch anderen Buchsen zugeordnet werden. Die Buchsen können auch über elektrische Kontakte oder Schalter verfügen, die das Einstecken eines Steckers anzeigen. Entsprechende Zuordnungseinrichtungen, z.B. Zuordnungselektroniken für die Buchsen, die eventuell u.a. auch sicherstellen, dass nicht zwei Sensoren gleichzeitig eingesteckt werden, sind an sich bekannt und werden hier nicht näher erläutert, sind hier aber vorteilhaft einsetzbar, weil sie das Vorsehen nur einer Antenne für eine größere Menge an Sensoren ermöglicht.

Vorzugsweise ist die Antenne am Messgerät für die Kommunikation mit dem Transponder als Drahtspule ausgeführt, die die am Messgerät ausgebildete Buchse bzw. mehrere Buchsen umgibt, vorzugsweise ring- oder schleifenförmig. Auf diese Weise wird automatisch beim Einstecken der Messeinheit am Messgerät auch eine gut funktionierende Kommunikationsverbindung zur bidirektionalen Energie- und Datenübertragung zum Transponder erzeugt. Ein Energiespeicher im Transponder, z.B. ein Kondensator, wird durch die von der Drahtspule ausgesandte Hochfrequenzenergie aufgeladen, und der Transponder damit in die Lage versetzt, entweder die im Transponder gespeicherten Kennungs- Kalibrierdaten und/oder Steuerdaten an das Messgerät auszusenden, welche Daten wiederum von der Drahtspule empfangen werden, oder die von der Drahtspule ausgesandten Daten bzw. Steuerbefehle für den Transponder zu verarbeiten und/oder zu speichern. Diese Anordnung der Antenne ist leicht zu realisieren und stört nicht im täglichen Betrieb der Messvorrichtung.

Vorzugsweise sind die Antennenspulen von Transponder und Lese/Empfangseinrichtung des Gerätes koaxial angeordnet so dass die Transponderspule beim Einstecken am Messgerät von der Spule des messgeräteseitigen Verbindungselements umgeben wird. Auf diese Weise wird eine sichere Daten- und Energieübertragung zwischen Transponderspule und der im Gerät angeordneten Spule sichergestellt. Im Besonderen wird dies erreicht, wenn der Transponder in Längsrichtung des Verbindungselements des Datenkabels angeordnet ist.

Selbstverständlich können in dem Speicher des Transponders unterschiedlichste Daten, wie z.B. Kalibrierwerte, Sensortyp, Seriennummer, Herstellungsdatum, Kalibrierhistorie, Gerätesteuerdaten etc., abgelegt werden, um dem Messgerät möglichst umfassende Informationen über den Sensor und damit auch über das vom Sensor gelieferte Messdatenmaterial zu erhalten. Umgekehrt können vom Messgerät ermittelte Daten, wie z.B. Kalibrierwerte, Zeitstempel, Bedienerkennung etc. vom Gerät an den Transponder übermittelt und dort in den Speicher geschrieben werden.

Durch die Erfindung wird eine sehr einfach zu realisierende Möglichkeit der bidirektionalen Datenübertragung zwischen dem Transponder des Sensors und dem Messgerät geschaffen, ohne den Einsatzbereich des Sensors damit zu beeinträchtigen.

Weitere Vorteile der Erfindung werden aus der nachfolgenden schematischen Zeichnung ersichtlich, die beispielsweise ein Ausführungsbeispiel in sehr grob skizzierter Weise enthält.

Figur 1 zeigt eine Messvorrichtung gemäß der Erfindung mit einem zweibuchsigen Messgerät.
Figur 2 zeigt ein separates Buchsenfeld, das in Verbindung mit einem Messgerät (5) vorgesehen sein kann.

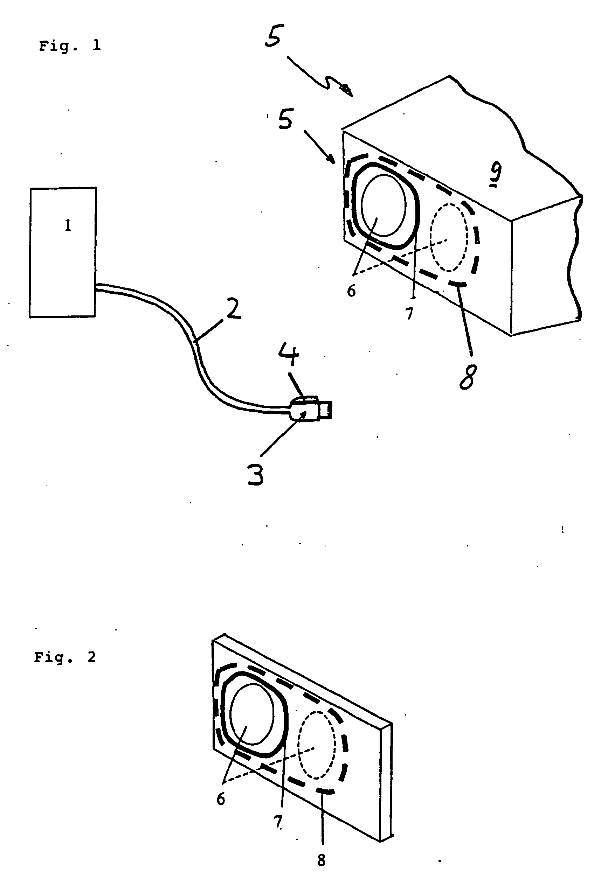

Figur 1 zeigt einen Sensor 1, der zur Messung von Parametern eines Gases oder einer Flüssigkeit oder auch von Feststoffen oder Schüttungen eingesetzt werden kann. Derartige Sensoren sind z.B. pH-Messketten, Redox-Messketten, ionenselektive Messketten, entsprechende Einzelelektroden, Leitfähigkeitszellen, Sauerstoffsensoren, Trübungssensoren, Temperatursensoren, optische Sensoren, etc. Der Sensor 1 ist fest mit einem Datenkabel 2 verbunden. Das Datenkabel 2 ist für den täglichen Gebrauch unlösbar mit dem Sensor 1 verbunden. D.h. eine eventuelle Verbindung zwischen Datenkabel und Sensor, z.B. eine Schraubverbindung oder Bajonettverbindung oder jegliche Art von Steckverbindung sollte derart ausgebildet sein, dass sie während des täglichen Gebrauchs nicht gelöst werden kann, sondern vorzugsweise nur unter Einsatz von Werkzeug, insbesondere Spezialwerkzeug, wie z.B. Inbusschlüssel oder dergleichen. Das Datenkabel 2 enthält an seinem freien Ende einen Stecker 3 zum Einstecken in die Buchse 6, welche in dem Gehäuse 9 eines Messgerätes vorgesehen ist. Das Messgerät kann beispielsweise ein Messgerät für die Verarbeitung und Anzeige einer Vielzahl unterschiedlicher Parameter ausgebildet sein. So kann ein derartiges Messgerät eine oder mehrere Buchsen für mehrere unterschiedliche Sensoren aufweisen. Der Stecker 3 am Ende des Datenkabels 2 ist mit einem Transponder 4 versehen, der vorzugsweise in Längsrichtung des Steckers 3 ausgerichtet ist. Beim Einstecken des Steckers 3 in die Buchse 6 des Messgerätes 5 gelangt der Transponder 4 in den Sende-/Empfangsbereich einer Spule 7, die entweder um die Buchse 6 herum angeordnet ist und/oder in den Sende-/Empfangsbereich einer anderen Spule 8, die mehrere oder alle an dem Messgerät 5 vorgesehenen Buchsen 6 umgibt.

Falls eine Spule 8 für alle Buchsen 6 vorgesehen ist, ist es vorteilhaft, wenn das Messgerät über eine wie auch immer geartete Vorrichtung verfügt oder Software aufweist, mit welcher erkannt wird, in welche Buchse 6 der Stecker 3 tatsächlich eingesteckt wurde. Dieses können hardwaremäßige Vorrichtungen wie Schalter, bestimmte Ausführungen der Buchsen, die nur bestimmte Stecker zulassen oder zeitliche Erfassung des Transponders etc. sein. Derartige Verfahren sind an sich bekannt und werden hier nicht weiter erläutert.

In dem Transponder 4 sind Daten abgelegt, die eine eindeutige Kennung des Sensors enthalten und vorzugsweise auch Kalibrierparameter. Daten, die so z.B. im Speicher des Transponders abgelegt sein könnten, sind z.B. die Identifikationsnummer oder Bezeichnung des Sensors, der Sensortyp, das Herstellungsdatum, die Messgröße, die Einheiten, der Messbereich, Kalibrierparameter, Messzeitpunkte und sensorbezogene Steuergrößen des Messgeräts oder zusätzliche Informationen.

Diese sensorspezifischen Daten werden separat von den Messdaten des Sensors, die über die Datenleitung 2 an das Messgerät 5 übertragen werden, übersandt, womit sich zum einen die Kennungsdaten und die Messdaten nicht gegenseitig beeinflussen und zum anderen eine eindeutige Zuordnung der Messdaten zum entsprechenden Sensortyp möglich ist.

Selbstverständlich kann das dem Messgerät zugewandte Ende des Datenkabels 2 auch als Buchse ausgebildet sein, während an dem Messgerät selbst ein Stecker ausgebildet ist. Wichtig ist nur, dass das Verbindungselement mit dem Transponder an dem dem Messgerät zugewandten Ende des Datenkabels angeordnet ist, wodurch die universelle Einsetzbarkeit der Messeinheit auch unter widrigen Bedingungen z.B. hinsichtlich Temperatur- oder Feuchtigkeits möglich ist.

Das Messgerät 5 selbst kann ein stationäres oder mobiles Messgerät sein. Gerade bei mobilen Messgeräten erleichtert sich die Handhabung verglichen mit der bekannten Messvorrichtung erheblich.

Fig. 2 zeigt eine Buchsenplatte, die z.B. über eine Bodenplatte mit dem Meßgerät verbunden oder in einem Abstand von dem Messgerät angeordnet sein kann, ohne in das Gehäuse des Messgerätes integriert zu sein. Die Funktionen der Buchsen 6 bzw. der Antennen 7,8 ist die gleiche wie in Figur 1.

## Patentansprüche

1. Messvorrichtung umfassend
- wenigstens eine Messeinheit (1), wie z.B. einen Sensor,
- ein Messgerät (5) zur Erfassung und/oder Verarbeitung der von der Messeinheit (I) gelieferten Messdaten,
- wenigstens eine Datenleitung mit einem Datenkabel (2) zur Übertragung wenigstens der Messdaten zwischen der Messeinheit (1) und dem Messgerät (5),
- einen Transponder (3) zur Übertragung von Kennungsdaten der Messeinheit (I) zwischen der Messeinheit (1) und dem Messgerät (5),
- eine Kommunikationseinrichtung für die Kommunikation der Kennungsdaten mit dem Transponder, und
- eine mit der Kommunikationseinrichtung verbundenen Antenne (7, 8), z.B. eine Spule, zur Kommunikation mit dem Transponder,
wobei
- die Messeinheit unlösbar mit dem Datenkabel (2) verbunden ist,
- die Kommunikationseinrichtung in dem Messgerät (5) angeordnet ist,
- der Transponder (4) an einem dem Messgerät (5) zugewandten Verbindungselement (3) des Datenkabels (2), z.B. einem Stecker, angeordnet ist, und
- die Antenne (7,8) an einem messgeräteseitigen Verbindungselement (6), z.B. einer Buchse, für das Datenkabel (2) angeordnet ist, welches als messgeräteseitiges Verbindungselement (6) in dem Messgerät (5) integriert ist.

2. Messvorrichtung nach Anspruch 1, wobei der Transponder (4) ein passiver Transponder ist und seine Energie aus der Antenne (7,8) bezieht.

3. Messvorrichtung nach Anspruch 1, wobei die Antenne (7, 8) als Drahtspule in der Ebene des messgeräteseitigen Verbindungselements (6) ausgebildet ist.

4. Messvorrichtung nach Anspruch 1, wobei die Antenne (7) als Drahtspule ausgeführt ist, die zumindest schleifenförmig um das als Buchse (6) ausgebildete messgeräteseitige Verbindungselement herum angeordnet ist.

5. Messvorrichtung nach Anspruch 4, wobei die Antenne (8) als Drahtspule ausgeführt ist, die schleifenförmig um mehrere Buchsen (6) für mehrere Messeinheiten herum angeordnet ist.

6. Messvorrichtung nach Anspruch 1, wobei die Antenne (7) auf einer separaten Baueinheit angeordnet ist, die auch eine oder mehrere Buchsen (6) aufnimmt.

7. Messvorrichtung nach Anspruch 6, wobei die separate Baueinheit als Buchsenfeld ausgebildet ist.

8. Messvorrichtung nach Anspruch 1, wobei die Antennenspule des Transponders (4) und die als Spule ausgebildete Antenne (7, 8) koaxial zueinander angeordnet sind.

9. Messvorrichtung nach Anspruch 1, wobei die Längsachse des Transponders (4) und/oder die Achse der als Spule ausgebildeten Antenne (7, 8) parallel zur Längsrichtung des Steckers (3) oder Kabels ausgerichtet ist.

10. Messvorrichtung nach Anspruch 1, wobei die übertragenen Daten Kalibrierwerte der Messeinheit enthalten.

11. Messvorrichtung nach Anspruch 1, wobei der Transponder (4) einen Speicher für eine Historie der Kalibrierwerte, den Sensortyp, die Seriennummer und/oder für Daten zur Steuerung des Messgeräts enthält.

12. Messvorrichtung nach Anspruch 1, wobei das messgeräteseitige Verbindungselement (6) in dem Gehäuse (9) des Messgeräts (5) oder in einem besonderen Gehäuseteil integriert ist.

13. Messvorrichtung nach Anspruch 12, wobei das besondere Gehäuseteil als Buchsenleiste ausgebildet ist.

14. Messvorrichtung nach Anspruch 1, wobei der Transponder (4) für eine bidirektionale Datenübertragung ausgebildet ist.

## Claims

1. Measuring apparatus comprising
- at least one measuring unit (1), such as a sensor for example,
- a measuring instrument (5) for registering and/or processing the measured data provided by the measuring unit,
- at least one data line with a data cable (2) for transferring at least the measured data between the measuring unit (1) and the measuring instrument (5),
- a transponder (3) for transferring identification data pertaining to the measuring unit (1) between the measuring unit (1) and the measuring instrument (5),
- a communications device for communication of the identification data to the transponder, and
- an antenna (7, 8), for example a coil, connected to the communications device, for communicating with the transponder,
wherein
- the measuring unit is permanently connected to the data cable (2),
- the communications device is arranged in the measuring instrument (5),
- the transponder (4) is arranged on a connecting element (3), for example a plug, of the data cable (2) facing towards the measuring instrument (5), and
- the antenna (7, 8) is arranged on a connecting element (6) on the measuring-instrument side, for example on a socket, for the data cable (2), said connecting element being integrated within the measuring instrument (5) as a connecting element (6) on the measuring-instrument side.

2. Measuring apparatus according to Claim 1, wherein the transponder (4) is a passive transponder and draws its energy from the antenna (7, 8).

3. Measuring apparatus according to Claim 1, wherein the antenna (7, 8) takes the form of a wire coil in the plane of the connecting element (6) on the measuring-instrument side.

4. Measuring apparatus according to Claim 1, wherein the antenna (7) is constructed as a wire coil which is arranged at least in the form of a loop around the connecting element on the measuring-instrument side taking the form of a socket (6).

5. Measuring apparatus according to Claim 4, wherein the antenna (8) is constructed as a wire coil which is arranged in the form of a loop around several sockets (6) for several measuring units.

6. Measuring apparatus according to Claim 1, wherein the antenna (7) is arranged on a separate assembly which also accommodates one or more sockets (6).

7. Measuring apparatus according to Claim 6, wherein the separate assembly takes the form of a socket board.

8. Measuring apparatus according to Claim 1, wherein the antenna coil of the transponder (4) and the antenna (7, 8) taking the form of a coil are arranged coaxially relative to one another.

9. Measuring apparatus according to Claim 1, wherein the longitudinal axis of the transponder (4) and/or the axis of the antenna (7, 8) taking the form of a coil are aligned parallel to the longitudinal direction of the plug (3) or cable.

10. Measuring apparatus according to Claim 1, wherein the transferred data include calibration values pertaining to the measuring unit.

11. Measuring apparatus according to Claim 1, wherein the transponder (4) contains a memory for a history of the calibration values, for the sensor type, for the serial number and/or for data relating to the control of the measuring instrument.

12. Measuring apparatus according to Claim 1, wherein the connecting element (6) on the measuring-instrument side is integrated within the housing (9) of the measuring instrument (5) or within a special housing part.

13. Measuring apparatus according to Claim 12, wherein the special housing part takes the form of a socket strip.

14. Measuring apparatus according to Claim 1, wherein the transponder (4) is designed for a bidirectional transfer of data.

## Revendications

1. Dispositif de mesure comprenant
- au moins une unité de mesure (1), comme par exemple un capteur,
- un appareil de mesure (5) pour la saisie et/ou le traitement des données de mesure livrées par l'unité de mesure (1),
- au moins une ligne de données avec un câble de données (2) pour la transmission au moins des données de mesure entre l'unité de mesure (1) et l'appareil de mesure (5),
- un transpondeur (3) pour la transmission de données d'identification de l'unité de mesure (1) entre l'unité de mesure (1) et l'appareil de mesure (5),
- un système de communication pour la communication des données d'identification avec le transpondeur, et
- une antenne (7, 8), par exemple une bobine, connectée au système de communication pour la communication avec le transpondeur,
dans lequel
- l'unité de mesure est reliée de manière détachable avec le câble de données (2),
- le système de communication est agencé dans l'appareil de mesure (5),
- le transpondeur (4) est agencé sur un élément de connexion (3), tourné vers l'appareil de mesure (5), du câble de données (2), comme par exemple une prise mâle, et
- l'antenne (7, 8) est agencée sur un élément de connexion (6) du côté de l'appareil de mesure, comme par exemple une prise femelle, pour le câble de données (2), lequel est intégré dans l'appareil de mesure (5) à titre d'élément de connexion (6) côté appareil de mesure.

2. Dispositif de mesure selon la revendication 1, dans lequel le transpondeur (4) est un transpondeur passif qui tire son énergie depuis l'antenne (7, 8).

3. Dispositif de mesure selon la revendication 1, dans lequel l'antenne (7, 8) est réalisée sous forme de bobine de fil dans le plan de l'élément de connexion (6) du côté de l'appareil de mesure.

4. Dispositif de mesure selon la revendication 1, dans lequel l'antenne (7) est réalisée sous forme de bobine de fil, qui est agencée au moins en formant une boucle tout autour de l'élément de connexion du côté de l'appareil de mesure, réalisé sous forme de prise femelle (6).

5. Dispositif de mesure selon la revendication 4, dans lequel l'antenne (8) est réalisée sous forme de bobine de fil, qui est agencée en formant une boucle tout autour de plusieurs prises femelles (6) pour plusieurs unités de mesure.

6. Dispositif de mesure selon la revendication 1, dans lequel l'antenne (7) est agencée sur une unité structurelle séparée, qui reçoit également une ou plusieurs prises femelles (6).

7. Dispositif de mesure selon la revendication 6, dans lequel l'unité structurelle séparée est réalisée sous forme de groupe de prises femelles.

8. Dispositif de mesure selon la revendication 1, dans lequel la bobine d'antenne du transpondeur (4) et l'antenne réalisée sous forme de bobine (7, 8) sont agencées coaxialement l'une par rapport à l'autre.

9. Dispositif de mesure selon la revendication 1, dans lequel l'axe longitudinal du transpondeur (4) et/ou l'axe de l'antenne (7, 8), réalisée sous forme de bobine, est orienté parallèlement à la direction longitudinale de la prise mâle (3) ou du câble.

10. Dispositif de mesure selon la revendication 1, dans lequel les données transmises contiennent des valeurs de calibrage de l'unité de mesure.

11. Dispositif de mesure selon la revendication 1, dans lequel le transpondeur (4) contient une mémoire pour un historique des valeurs de calibrage, le type de capteur, le numéro de série et/ou pour des données destinées à la commande de l'appareil de mesure.

12. Dispositif de mesure selon la revendication 1, dans lequel l'élément de connexion (6) du côté appareil de mesure est intégré dans le boîtier (9) de l'appareil de mesure (5) ou dans une partie de boîtier particulière.

13. Dispositif de mesure selon la revendication 12, dans lequel la partie de boîtier particulière est réalisée sous forme de groupe de prises femelles.

14. Dispositif de mesure selon la revendication 1, dans lequel le transpondeur (4) est réalisé pour une transmission de données bidirectionnelle.
